# EUROPÄISCHE PATENTSCHRIFT

(11) **EP 4 339 022 B1**
(45) Veröffentlichungstag und Bekanntmachung des Hinweises auf die Patenterteilung: **16.10.2024**
(21) Anmeldenummer: 23196867.8
(22) Anmeldetag: 12.09.2023
(51) Int. Cl.: B60Q 1/00, B60Q 1/26, B60R 13/00, B60R 13/04, B60R 19/50, F21W 103/00, F21W 104/00, F21W 103/20, F21S 43/00

(54) **VERKLEIDUNGSTEIL FÜR EIN KRAFTFAHRZEUG**
TRIM PART FOR A MOTOR VEHICLE
PIÈCE DE GARNITURE POUR UN VÉHICULE AUTOMOBILE

(30) Priorität: 16.09.2022 DE 102022209763
(43) Veröffentlichungstag der Anmeldung: 20.03.2024
(73) Patentinhaber: Magna Exteriors GmbH, 63877 Sailauf (DE)
(72) Erfinder: GÖTZELMANN, Johannes, 97237 Altertheim (DE); MÜNKER, Klaus, 83556 Griesstätt (DE); WURSTER, Michael, 73732 Esslingen (DE); WEYER, Tobias, 50735 Köln (DE)
(74) Vertreter: Reuter, Silke Beatrix

(56) Entgegenhaltungen:
- EP-A1- 2 589 859
- DE-A1- 102009 039 038
- DE-A1- 102018 117 728
- DE-U1- 202020 104 697
- FR-A1- 3 048 486
- FR-A1- 3 117 574

## Beschreibung

Die Erfindung betrifft ein Verkleidungsteil für ein Kraftfahrzeug, wobei das Verkleidungsteil insbesondere ein Frontmodul ist.

### Stand der Technik

Durch die zunehmende Verbreitung von elektrischen Fahrzeugen ändern sich die Anforderungen an Frontpanele, da keine Kühlereintrittsöffnungen in demselben Maß wie für konventionelle Kraftfahrzeuge mit Verbrennungsmotoren gefordert sind.

Frontpanele in elektrischen Fahrzeugen bekommen mehr und mehr geschlossene Kühlerverkleidungen, was eine bessere Aerodynamik des Fahrzeugs bei gleichzeitig weniger Kühlluftbedarf entspricht.

Frontpanele können aus transparentem Polycarbonat gefertigt und mit geeigneten Dekorationselementen oder auch Funktionselementen, wie beispielsweise Beleuchtungsmodulen versehen werden. Hierfür werden die Frontpanele gemäß dem Stand der Technik in einem Zweikomponenten Spritzgussverfahren hergestellt.

Die Rückseite, also die Fahrzeuginnenseite des dreidimensional geformten Frontpanels, wird anschließend lackiert, wobei die Vorderseite, also die Außenseite des Fahrzeugs, vor Lacknebel geschützt werden muss. Dazu wird die Vorderseite maskiert. Zur Herstellung von mehrfarbigen Strukturen werden eingeprägte Geometrien des Frontpanel mit einem Laser freigelegt. Anschließend erfolgt eine Beschichtung der Innenseite mit einem physikalischen Gasabscheideverfahren (PVD), um einen Chrom effekt bei gleichzeitiger Lichttransparenz zu bekommen. Die Vorderseite erhält eine Hartlackbeschichtung.

Des Weiteren ist es bekannt in die Frontpanele separate Bauteile wie beispielsweise Markensymbole zu integrieren. Die Bauteile können mit Chromfolie dekoriert und anschließend in entsprechende Ausnehmungen des in der Farbgestaltung des Lacks des Kraftfahrzeugs lackierten Kunststoffformteile eingesetzt werden.

Diese dekorierten Bauteile wie beispielsweise Markensymbole können durch den Einsatz von lichtdurchlässigen Werkstoffen von der Rückseite beleuchtet werden und bilden damit eine dekorative Beleuchtungsfunktion. Derartig bekannte Verkleidungselemente mit integrierten Leuchtfunktionen haben allerdings den Nachteil, dass die Beleuchtung nur dekorativ ist und keine Funktionsbeleuchtung.

Aus dem Dokument EP 3 144 182 B1 ist ein Verkleidungsteil eines Kraftfahrzeugs bekannt, welches eine Beleuchtungsfunktion bereitstellt. Das Verkleidungsteil hat eine Wand, die den Innenraum des Verkleidungsteils abgrenzt. Eine oder mehrere Durchgangsöffnungen sind durch Durchdringung der Wand gebildet. Eine Beleuchtungseinrichtung ist im Innenraum des Verkleidungsteils angeordnet und mit einer Lichtquelle verbunden. Um die Beleuchtungseinrichtung zwischen einer Öffnungsstellung, in der das von der Beleuchtungseinrichtung abgegebene Licht durch die Durchgangsöffnungen hindurchtritt, und einer Schließstellung, in der das von der Beleuchtungseinrichtung abgegebene Licht nicht durch die Durchgangsöffnungen hindurchtritt, zu bewegen, ist eine Verstelleinrichtung vorgesehen.

Das Dokument DE 10 2018 010 030 A1 offenbart eine Heckleuchte eines Kraftfahrzeugs. Die Heckleuchte besteht aus einem transparenten Abdeckglas, das mit weißen Lichtquellen versehen ist. Das transparente Abdeckglas ist für ein ungefärbtes transparentes Fenster rot eingefärbt. Das transparente Fenster ist mit einem mechanisch beweglichen Filterelement ausgestattet. Ein rot eingefärbter Bereich sich zwischen dem Fenster und den Lichtquellen. Der ungefärbte transparente Bereich befindet sich zwischen dem Fenster und den Lichtquellen und ist auf optischen Linsen angeordnet.

Das Dokument FR 3117574 A1 offenbart ein Verkleidungsteil mit einem bewegbaren Abschnitt. In einer eingezogenen Position dient dieser Abschnitt als Reflektor.

Es ist Aufgabe der Erfindung, ein Verkleidungsteil mit einer farbig gestalteten Sichtseite, wobei die Farbe vorzugsweise die Wagenfarbe ist, für ein Kraftfahrzeug bereitzustellen, welches zumindest eine Beleuchtungsfunktion bereitstellt, wobei ein Lichtmodul mit einer Lichtfunktion in einem ersten Zustand für einen Nutzer von der Außenseite des Kraftfahrzeugs gesehen nicht sichtbar und in einem zweiten Zustand für einen Nutzer von der Außenseite gesehen sichtbar ist.

Die Aufgabe wird durch ein Verkleidungsteil mit folgenden Merkmalen gelöst: mit einem Grundkörper, der eine zur Außenseite weisende Sichtseite und eine Innenseite aufweist und der zumindest in einem Teilbereich ein Lichtfenster in Form eines lichtdurchscheinenden transparenten oder transluzenten Bereichs, und zumindest in einem Teilbereich einen nicht lichtdurchlässigen Bereich mit einer farbgebenden Beschichtung umfasst, mit einer Beleuchtungsfunktion, die hinter der Sichtseite des Grundkörpers zur Durchleuchtung oder Beleuchtung des Lichtfensters angeordnet ist und mit einer Vorrichtung, die eine Sichtseite aufweist, die eine farbgebende Beschichtung aufweist, wobei die Vorrichtung derart verstellbar an dem Grundkörper angebunden ist, dass die Vorrichtung in einer ersten Position das Lichtfenster verschließt und die Beleuchtungsfunktion von der Außenseite gesehen vollständig abdeckt und die Sichtseite zur Außenseite hin weisend ausgerichtet ist und in einer zweiten Position das Lichtfenster und die Beleuchtungsfunktion von der Außenseite gesehen derart freigibt, dass die Beleuchtungsfunktion durch das Lichtfenster von der Außenseite gesehen sichtbar ist.

Durch das erfindungsgemäße Verkleidungsteil ist es möglich eine Beleuchtungsfunktion / Funktionsbeleuchtung mit einer "Verschwindefunktion" (secret until lit) zu realisieren. Dies bedeutet, dass in einem ersten Zustand für einen Nutzer die Beleuchtungsfunktion nicht sichtbar ist und durch eine erste Position einer Vorrichtung abgedeckt ist. In einem zweiten Zustand ist die Beleuchtungsfunktion, die zumindest eine Lichtquelle umfasst, für eine Nutzer von der Außenseite her sichtbar und die Vorrichtung ist in einer entsprechenden zweiten Position verstellt. Allgemein kann die Vorrichtung mit dem Verkleidungsteil auch mehr als zwei einstellbare Positionen aufweisen und so verschiedene Beleuchtungsfunktionen, die in Helligkeit, Abstrahlwinkel, Anleuchtewinkel und Anstrahlposition usw. variieren, darstellen.

Durch das erfindungsgemäße Verkleidungsteil ist es weiterhin möglich dem Nutzer eines Kraftfahrzeugs und/oder einem Verkehrsteilnehmer unterschiedliche Leuchtfunktionen zumindest zeitweise zur Verfügung zu stellen. Diese Leuchtfunktionen können sowohl sicherheitsrelevante Aspekte als auch Kommunikationsmöglichkeiten durch beleuchtete Symbole, Schriftzüge beinhalten. Die Leuchtfunktionen können auch Designmerkmale beinhalten. Hierdurch wird eine Erweiterung der Funktionsmöglichkeiten bei beleuchteten Frontpanels erreicht. Als weitere integrierbare Funktion ist beispielsweise die Blinkerfunktion vorstellbar.

Die Vorrichtung ist dabei in die erste und zweite Position verstellbar an einem Grundkörper des Verkleidungselements angebunden. Weitere Positionen sind ebenfalls möglich.

In dem ersten Zustand und der ersten Position der Vorrichtung fügt sich die Vorrichtung in ein in dem Grundkörper gebildetes Lichtfensters in den Grundkörper vorteilhafterweise bündig ein derart, dass das Verkleidungselement ein einheitliches Erscheinungsbild hat. Dieses einheitliche Erscheinungsbild ist in einer Ausführungsform eine Lackierung in einer einheitlichen Farbe. Dementsprechend ist die zur Außenseite hin gerichtete Sichtseite der Vorrichtung in der ersten Position ebenfalls mit einer Lackierung und/oder Beschichtung versehen.

In weiteren Ausführungsformen kann die Sichtseite auch Zahlen, Schriftzüge, Embleme, Reflektoren und/oder Designelemente aufweisen und somit nicht völlig mit der Außenkontur des Fahrzeugs verschmelzen.

Vorteilhafterweise fügt sich die Vorrichtung in der ersten Position derart in dem Grundkörper bzw. dem Dekorträger im Bereich des Lichtfensters ein, dass auf der Außenseite des Verkleidungsteils ein flächenbündiger, fugenloser Oberflächenbereich ausgebildet ist.

Die farbgebende Beschichtung der Sichtseite der Vorrichtung ist dabei in einer besonders bevorzugten Ausführungsform die gleiche Farbe wie die farbgebende Beschichtung des Grundkörpers, wobei diese Farbe der Wagenfarbe des Kraftfahrzeugs entspricht. Hierdurch ist in der ersten Position der Vorrichtung von der Außenseite des Kraftfahrzeugs für den Nutzer eine einheitliche farbgebende Beschichtung über das Verkleidungsteil wahrnehmbar.

In der zweiten Position ist die Vorrichtung derart verstellt an dem Grundkörper des Verkleidungselements angebunden gehalten, dass die Beleuchtungsfunktion, durch das in dem Grundkörper gebildete Lichtfenster von der Außenseite des Kraftfahrzeugs für einen Nutzer sichtbar ist.

Die Verstellbewegung wird vorteilhafterweise über geeignete Kinematikelemente erreicht.

Der Grundkörper des Verkleidungselements ist vorteilhafterweise ein Verbundbauteil, welches eine mit einem transparenten Polymermaterial hinterspritzte tiefgezogene Dekorträger, insbesondere Folie umfasst, wobei der Dekorträger zumindest teilweise mit einer Farbschicht versehen ist und zumindest ein transparentes oder transluzentes Lichtfenster aufweist.

Nachfolgend Definitionen im Sinne der vorliegenden Erfindung. Als Außenseite wird die von der Umgebung her für einen Nutzer sichtbare Oberfläche gesehen. Die Innenseite ist dementsprechend die der Außenseite gegenüberliegende zur Innenseite weisende Seite.

Als Verkleidungsteil wird insbesondere ein Außenverkleidungsteil wie beispielsweise ein Frontpanel angesehen, wobei das Frontpanel dreidimensional ausgestaltet ist.

Das Lichtfenster im Sinne der vorliegenden Erfindung kann ein im Grundkörper des Verkleidungselements ausgebildeter transparenter oder teiltransparenter/transluzenter Bereich sein. Der Grundkörper ist beispielsweise durch eine tiefgezogene Folie, in die eine entsprechende Ausstanzung eingebracht ist, wobei die Folie anschließend in einem Spritzgießverfahren mit einem transparenten Kunststoffmaterial hinterspritzt ausgebildet ist, hergestellt. Die mit transparenten Kunststoffmaterial, vorzugsweise einem Polycarbonat, hinterspritzte Seite bildet in der fertiggestellten und montierten Situation des Verkleidungselements die Sichtseite am Kraftfahrzeug für einen Nutzer.

Die farbgebende Beschichtung kann durch eine Lackierung oder eine Lackfolie hergestellt sein.

Die Beleuchtungsfunktion wird durch zumindest eine Lichtquelle hergestellt. Als Lichtquelle kann eine oder können mehrere LEDs dienen. Das Licht der Lichtquelle kann in einer bevorzugten Ausführungsform in einen Lichtleitkörper eingekoppelt werden, der das Licht an entsprechenden Lichtauskoppelstrukturen abstrahlt.

Erfindungsgemäß ist die Vorrichtung ein translatorisch nach außen verstellbarer Abschnitt.

### Beschreibung der Erfindung

Die Erfindung wird nachfolgend beispielhaft unter Bezugnahme auf die beigefügte Zeichnung beschrieben.

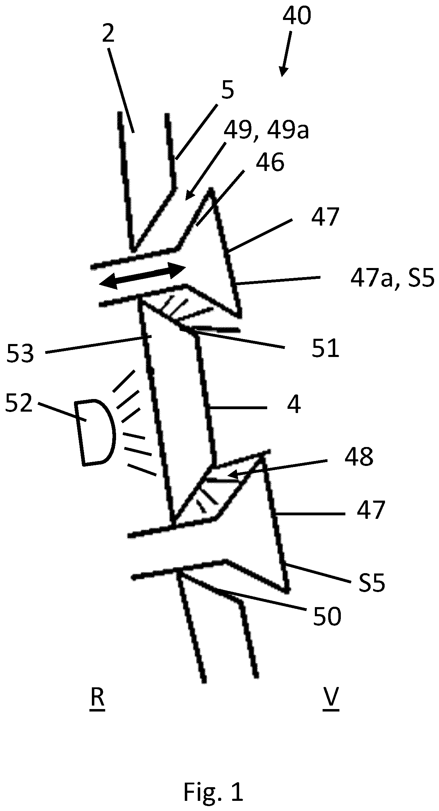

- Fig. 1: eine Ausführungsform in einem Schnittbild in dem zweiten Zustand, in dem die Lichtfunktion freigegeben und aktiviert ist.

Das erfindungsgemäße Verkleidungsteil 40 wird nachfolgend anhand eines Frontpanels als Außenverkleidung im Frontbereich eines Elektrofahrzeugs beschrieben. Es ist selbstverständlich, dass ein derartiges Verkleidungsteil 40 auch an beliebiger anderer Stelle eines Kraftfahrzeugs als Verkleidungselement eingesetzt werden kann. Das Verkleidungsteil 40 ist bevorzugt auch eine Stoßfängerverkleidung, eine Heckklappenverkleidung, eine Türverkleidung, eine Dachverkleidung oder ein Spoiler oder ist ein Bauteil eines der vorgenannten Teile.

Das Verkleidungsteil 40 weist einen Grundkörper 2 auf, der ein dreidimensional ausgeformtes Kunststoffverbundbauteil ist, welches in verschiedenen Herstellverfahren bzw. Verfahrensschritten gefertigt werden kann. Das Verkleidungsteil 40 ist in der Zeichnung als Ausschnitt in einer schematischen Schnittdarstellung gezeigt und weist eine Vorderseite (V) und eine Rückseite (R) auf. Die Vorderseite V ist die Sichtseite der Außenhaut des Kraftfahrzeugs in der bestimmungsgemäßen Einbausituation am Kraftfahrzeug und für einen Nutzer sichtbar.

Das Kunststoffverbundbauteil umfasst einen tiefgezogenen dreidimensional ausgebildeten Dekorträger 4 und zumindest eine außenseitig angeordnete transparente Abdeckschicht 5. Der Dekorträger 4 ist eine Kunststofffolie, insbesondere eine transparente Kunststofffolie, die eine farbige Beschichtung/Lackierung, auf der der Außenseite zugewandten Seite aufweist. Die Lackierung kann hinsichtlich der Farbgestaltung der Lackierung des Kraftfahrzeugs entsprechen.

Die Folie als Dekorträger 4 ist in einem Spritzgießverfahren mit einem transparenten Polymermaterial zur Herstellung der Abdeckschicht 5, vorzugsweise einem Polycarbonat zumindest auf der zur Vorderseite weisenden Seite hinterspritzt.

Die Figur 1 zeigt in einer Ausführungsform das erfindungsgemäße Verkleidungsteil 40 mit einem mit einer farbgebenden Beschichtung ausgeführten Grundkörper 2. Der Grundkörper 2 ist aus einem Kunststoffmaterial wie einem PP, Polycarbonat oder ABS hergestellt und farbig lackiert. Der Grundkörper weist eine Vielzahl von Durchbrüchen oder Aussparungen auf, die die Lichtfenster 49 bilden. Die Lichtfenster 49 sind mit einer nach innen verlaufenden Fase konisch ausgeführt.

Wie es aus der Zeichnung zu erkennen ist, ist die Vorrichtung 47 in Form von Schiebeelementen nachfolgend auch Inserts genannt ausgeführt. Die Schiebeelemente sind in den Lichtfenstern 49 längsverschieblich gelagert angeordnet und weisen einen Kopfabschnitt 47a mit einer zur Außenseite hin gerichteten Sichtseite S5 und einen rückseitig daran angeformten Anlageabschnitt 46 auf. Dieser Anlageabschnitt 46 ist hinsichtlich seiner Geometrie korrespondierend zu den gefasten bzw. konisch ausgebildeten Durchbrüchen des Grundkörpers 2 konischen bzw. umlaufend gefast ausgeführt und ermöglicht somit eine flächenbündige Aufnahme des Kopfabschnitts 47a in den Lichtfenstern in der ersten Position.

Im Anschluss an den Anlageabschnitt 46 sind die Inserts mit einem durch den Durchbruch geführten Pin ausgeführt. Über diesen Pin sind die Vielzahl der Inserts rückseitig an einem Halteelement angebunden, welches zur Verstellung in die zweite Position, die in der Figur 1 dargestellt ist, eine dem Halteelement zugeordnete Kinematik und Aktuatorik umfasst.

Die Inserts können zumindest im Kopfabschnitt 47a als Dekorationselemente ausgeführt und mit unterschiedlichen Farben, oder als verchromtes oder PVD beschichtetes Bauteil zumindest auf der zur Außenseite hin gerichteten Sichtseite Seite S5 ausgeführt werden.

In einer Ausführungsform sind die Schiebeelemente bzw. Inserts zumindest auf der Sichtseite S5 gleichermaßen, wie der lackierte Grundkörper 2 bzw. der Dekorträger 4 lackiert. Diese Farbe entspricht der Wagenfarbe, so dass sich hierdurch in der ersten Position, in der die Vorrichtung flächenbündig in dem Grundkörper eingefügt ist, ein einheitliches möglichst fugenloses Erscheinungsbild ausgehend von der Außenseite für einen Nutzer gebildet ist.

Bei der in der Figur 1 dargestellten zweiten Position, ist die Vorrichtung 47 bzw. sind die Vielzahl von Schiebeelementen über das Halteelement mittels einer Verstellbewegung nach außen über die Oberflächenkontur des Grundkörpers 2 geschoben. In dieser Stellung ergibt sich zwischen den Durchbrüchen im Grundkörper 2 und den Schiebeelementen jeweils ein umlaufender Lichtspalt 49a, so dass die Beleuchtungsfunktion 48 freigegeben ist und das abgestrahlte Licht durch den Lichtspalt zur Außenseite hin abstrahlen kann.

Die in dem zweiten Zustand freigebbare Beleuchtungsfunktion 48 wird dabei durch den Grundkörper 2 gebildet, der zumindest in einem rückseitigen Teilbereich als Lichtleitkörper 53 ausgeführt ist. Eine rückseitig im Innenraum angeordnete Lichtquelle 52 koppelt dabei das Licht in den Lichtleitkörper ein. Der Lichtleitkörper umfasst dabei auch den gefasten Abschnitt im Grundkörper, der die umlaufende Kontur des Lichtfensters bildet. Das Licht wird dann durch die umlaufende Kontur als Lichtaustrittsfläche 49 durch den Lichtspalt 49a zur Außenseite hin abgestrahlt.

Die transparente Lichtaustrittsfläche im Grundkörper wird durch Maskierung, oder durch Abtrag (mechanisch, Lasern, usw.) der farbgebenden Beschichtung hergestellt.

In einer nicht dargestellten Ausführungsform ist das Lichtelement selbst so gestaltet, dass es in dem Grundkörper im Bereich des Durchbruchs eingebettet gehalten ist und so die umlaufende Kontur des Durchbruchs darstellt.

Merkmal der gefasten, konisch verlaufenden die Lichtfenster begrenzenden Flächen im Grundkörper und der korrespondierend ausgeführten Anlageflächen am Schiebeelement ist, dass diese bei der Verstellbewegung in der ersten Position zueinander einen definierten Schließpunkt für Zurückziehen der Schiebeelemente in den geschlossenen Zustand bilden, um auf der Außenfläche des Verkleidungsteils ein möglichst ebenes fugenfreies Bild zu erzeugen. Des Weiteren ist in dieser ersten Position die Beleuchtungsfunktion selbst verdeckt und im geschlossenen Zustand nicht sichtbar.

Die Form der Durchbrüche und der Schiebeelemente ist in Anspruch 1 definiert. Sie kann jedoch so gewählt werden, dass hier neben eckigen, wie runden Formen auch komplexere Konturen wie Markenembleme und Schriftzüge dargestellt werden können.

### Bezugszeichenliste

- 2: Grundkörper
- 4: Dekorträger
- 5: Abdeckschicht
- 40: Verkleidungsteil
- 46: konischer Abschnitt
- 47: Vorrichtung
- 47a: Kopfabschnitt
- 48: Beleuchtungsfunktion
- 49: Lichtfenster
- 49a: Lichtspalt
- 50: Einprägung, konische Aussparung
- 51: Lichtaustrittsfläche
- 52: Lichtquelle
- 53: Lichtleitkörper
- S5: Sichtseite
- V: Vorderseite
- R: Rückseite

## Patentansprüche

1. Verkleidungsteil (40) einer Außenhaut eines Fahrzeugs
- mit einem Grundkörper (2), der eine zur Außenseite weisende Sichtseite und eine Innenseite aufweist und der zumindest in einem Teilbereich ein Lichtfenster (49) in Form eines lichtdurchscheinenden transparenten oder transluzenten Bereichs, und zumindest in einem Teilbereich einen nicht lichtdurchlässigen Bereich mit einer farbgebenden Beschichtung umfasst,
- mit einer Beleuchtungsfunktion (48), die hinter der Sichtseite des Grundkörpers (2) zur Durchleuchtung oder Beleuchtung des Lichtfensters (49) angeordnet ist,
- mit einer Vorrichtung (47), die eine Sichtseite (S5) aufweist, die eine farbgebende Beschichtung aufweist, wobei die Vorrichtung (47) derart verstellbar an dem Grundkörper (2) angebunden ist, dass die Vorrichtung (47) in einer ersten Position das Lichtfenster (49) verschließt und die Beleuchtungsfunktion (48) von der Außenseite gesehen vollständig abdeckt und die Sichtseite zur Außenseite hin weisend ausgerichtet ist und in einer zweiten Position das Lichtfenster (49) und die Beleuchtungsfunktion (48) von der Außenseite gesehen derart freigibt, dass die Beleuchtungsfunktion durch das Lichtfenster (49) von der Außenseite gesehen sichtbar ist,
**dadurch gekennzeichnet, dass** die Vorrichtung (47) wenigstens ein längsverschieblich an dem Grundkörper (2) gelagertes Schiebeelement mit einem die Sichtseite (S5) bildenden Kopfabschnitt (47a) und einem rückseitig am Kopfabschnitt (47a) angeformten konischen Abschnitt (46) aufweist, wobei das Lichtfenster (49) als im Grundkörper (2) ausgeführte durchgängige Aussparung ausgeführt ist, die mit einem konischen Abschnitt (50) zur bündigen Aufnahme des Kopfabschnitts (47a) des Schiebeelemente in der ersten Position ausgebildet sind und wobei das Schiebeelement in der zweiten Position zumindest mit dem Kopfabschnitt (47a) zur Außenseite hin herausgeschoben gehalten ist, so dass ein lichtdurchlässiger Spalt (49a) zwischen dem Schiebeelement und dem Lichtfenster (49) entsteht, und dass der Grundkörper (2) im Bereich der konisch ausgebildeten Aussparung (50) frei von einer farbgebenden Beschichtung ist und eine Lichtaustrittsfläche (51) für die Beleuchtungsfunktion bildet.

2. Verkleidungsteil (40) nach Anspruch 1, **dadurch gekennzeichnet, dass** die farbgebende Beschichtung des Grundkörpers (2) und die farbgebende Beschichtung der Sichtseite der Vorrichtung mit der gleichen Farbe, vorzugsweise der Wagenfarbe ausgeführt sind.

3. Verkleidungsteil (40) nach Anspruch 1 oder 2, **dadurch gekennzeichnet, dass** der Grundkörper (2) als Kunststoffverbundbauteil einen dreidimensional ausgebildeten Dekorträger (4), und zumindest eine außenseitig angeordnete transparente Abdeckschicht (5) aufweist, wobei die Abdeckschicht (5) vorzugsweise aus einem Polymermaterial auf der nach außen weisenden Seite des Dekorträgers (4) hinterspritzt ausgeführt ist.

4. Verkleidungsteil (40) nach Anspruch 3, **dadurch gekennzeichnet, dass** der Dekorträger (4) eine transparente Kunststofffolie ist, der zur Ausbildung der farbgebenden Beschichtung, vorzugsweise eine Lackierung aufweist.

5. Verkleidungsteil (40) nach Anspruch 3, **dadurch gekennzeichnet, dass** der Dekorträger (4) zur Ausbildung der farbgebenden Beschichtung eine farbige, nicht lichtdurchlässige Folie ist, die zur Ausbildung des lichtdurchlässigen Bereichs mit zumindest einer Ausstanzung oder Aussparung zur Bildung des Lichtfensters versehen ist.

6. Verkleidungsteil (40) nach einem der vorangehenden Ansprüche, wobei die Vorrichtung (47) in der ersten Position derart in dem Grundkörper (2) bzw. dem Dekorträger (4) eingefügt ist, dass auf der Außenseite des Verkleidungsteils ein flächenbündiger Oberflächenbereich ausgebildet ist.

7. Verkleidungsteil (40) nach einem der vorangehenden Ansprüche, **dadurch gekennzeichnet, dass** die Beleuchtungsfunktion (48) zumindest eine Lichtquelle umfasst, die vorzugsweise als eine oder mehrere LEDs ausgeführt ist.

8. Verkleidungsteil (40) nach Anspruch 5, **dadurch gekennzeichnet, dass** die Beleuchtungsfunktion (48) zumindest einen Lichtleitkörper umfasst, wobei das in den Lichtleitkörper eingekoppelte Licht der Lichtquelle an Lichtleitstrukturen auskoppelbar ist.

9. Verkleidungsteil (40) nach Anspruch 1, **dadurch gekennzeichnet, dass** der Kopfabschnitt als Markenemblem oder Symbol oder Schriftzug ausgeführt ist.

10. Verkleidungsteil (40) nach einem der vorangehenden Ansprüche, wobei die Beleuchtungsfunktion sowohl sicherheitsrelevante Aspekte wie eine Blinklichtfunktion als auch beleuchtete Symbole, Schriftzüge oder auch beleuchtete Markenembleme beinhalten kann.

## Claims

1. Trim part (40) of a body shell of a motor vehicle,
- having a base body (2), which has a visible side facing towards the outer side and an inner side and which comprises a light window (49) in the form of a light-transmitting transparent or translucent region at least in a subregion, and an opaque region with a colouring coating at least in a subregion,
- having an illumination function (48), which is arranged behind the visible side of the base body (2) for shining through or illuminating the light window (49),
- having a device (47) which has a visible side (S5) that has a colouring coating, the device (47) being connected adjustably to the base body (2) in such a way that in a first position the device (47) closes the light window (49) and fully covers the illumination function (48) as seen from the outer side and the visible side is orientated towards the outer side, and in a second position it uncovers the light window (49) and the illumination function (48) as seen from the outer side, in such a way that the illumination function is visible through the light window (49) as seen from the outer side, **characterized in that** the device (47) has at least one slide element mounted longitudinally displaceably on the base body (2) with a head section (47a) forming the visible side (S5) and a conical section (46) formed on the rear side of the head section (47a), the light window (49) being configured as a through-recess formed in the base body (2), which is configured with a conical section (50) for flush reception of the head section (47a) of the slide element in the first position, and the slide element being held in the second position at least with the head section (47a) extended towards the outer side, so that a light-transmitting gap (49a) is created between the slide element and the light window (49), and **in that** the base body (2) is free of a colouring coating in the region of the conically configured recess (50) and forms a light exit face (51) for the illumination function.

2. Trim part (40) according to Claim 1, **characterized in that** the colouring coating of the base body (2) and the colouring coating of the visible side of the device are configured with the same colour, preferably the body colour.

3. Trim part (40) according to Claim 1 or 2, **characterized in that** the base body (2) as a composite plastic component has a three-dimensionally configured decoration carrier (4) and at least one externally arranged transparent cover layer (5), the cover layer (5) preferably being formed by back-injection-moulding from a polymer material on the outwardly facing side of the decoration carrier (4).

4. Trim part (40) according to Claim 3, **characterized in that** the decoration carrier (4) is a transparent plastic film, which preferably has painting in order to form the colouring coating.

5. Trim part (40) according to Claim 3, **characterized in that** in order to form the colouring coating, the decoration carrier (4) is a coloured opaque film which, in order to form the light-transmitting region, is provided with at least one punching or recess in order to form the light window.

6. Trim part (40) according to one of the preceding claims, wherein the device (47) in the first position is inserted in the base body (2) or the decoration carrier (4) in such a way that a surface region flush with the adjacent areas is formed on the outer side of the trim part.

7. Trim part (40) according to one of the preceding claims, **characterized in that** the illumination function (48) comprises at least one light source, which is preferably configured as one or more LEDs.

8. Trim part (40) according to Claim 5, **characterized in that** the illumination function (48) comprises at least one light-guide body, the light of the light source coupled into the light-guide body being capable of being coupled out at light-guide structures.

9. Trim part (40) according to Claim 1, **characterized in that** the head section is configured as a brand emblem or symbol or lettering.

10. Trim part (40) according to one of the preceding claims, wherein the illumination function may involve both safety-relevant aspects, such as a flashing light function, and illuminated symbols, lettering or illuminated brand emblems.

## Revendications

1. Pièce de garniture (40) d'une peau extérieure d'un véhicule, ladite pièce de garniture comprenant
- un corps de base (2) qui comporte un côté visible tourné vers le côté extérieur et un côté intérieur et qui comprend, au moins dans une sous-zone, une fenêtre de lumière (49) sous la forme d'une zone translucide, transparente ou laissant passer la lumière et, dans au moins une sous-zone, une zone ne laissant passer la lumière et pourvue d'un revêtement colorant,
- une fonction d'éclairage (48) qui est disposée derrière le côté visible du corps de base (2) afin d'éclairer par transparence ou d'illuminer la fenêtre de lumière (49),
- un dispositif (47) qui comporte un côté visible (S5) qui comporte un revêtement colorant, le dispositif (47) étant relié au corps de base (2) de manière réglable de manière à ce que le dispositif (47) ferme la fenêtre de lumière (49) dans une première position et recouvre totalement la fonction d'éclairage (48) lorsqu'on le regarde depuis le côté extérieur et le côté visible étant orienté vers le côté extérieur et libère dans une deuxième position la fenêtre de lumière (49) et la fonction d'éclairage (48) lorsque l'on regarde depuis le côté extérieur, de manière à ce que la fonction d'éclairage soit visible à travers la fenêtre de lumière (49) lorsque l'on regarde depuis le côté extérieur,
**caractérisé en ce que** le dispositif (47) comporte au moins un élément coulissant monté sur le corps de base (2) de manière à coulisser longitudinalement et pourvu d'une portion de tête (47a) formant le côté visible ($5) et d'une portion conique (46) formé à l'arrière sur la portion de tête (47a), la fenêtre de lumière (49) étant conçue comme un évidement continu qui est ménagé dans le corps de base (2) et qui est conçu avec une portion conique (50) destinée à recevoir à fleur la portion de tête (47a) de l'élément coulissant dans la première position et l'élément coulissant étant maintenu dans la deuxième position en étant repoussé au moins avec la portion de tête (47a) vers le côté extérieur de manière à ce qu'un espace de passage de lumière (49a) soit ménagé entre l'élément coulissant et la fenêtre de lumière (49), et à ce que, dans la zone de l'évidement (50) de forme conique, le corps de base (2) soit dépourvu de revêtement colorant et forme une surface de sortie de lumière (51) destinée à la fonction d'éclairage.

2. Pièce de garniture (40) selon la revendication 1, **caractérisée en ce que** le revêtement colorant du corps de base (2) et le revêtement colorant du côté visible du dispositif sont conçus avec la même couleur, de préférence la couleur du véhicule.

3. Pièce de garniture (40) selon la revendication 1 ou 2, **caractérisée en ce que** le corps de base comporte comme composant composite en matière synthétique un support décoratif (4) de conception tridimensionnelle et au moins une couche de recouvrement transparente (5) disposée du côté extérieur, la couche de recouvrement (5) étant réalisée par rétro-injection sur le côté du support décoratif (4) qui est dirigé vers l'extérieur, de préférence à partir d'une matière polymère.

4. Pièce de garniture (40) selon la revendication 3, **caractérisée en ce que** le support décoratif (4) est un film de matière synthétique transparent qui présente de préférence une couche de peinture afin de former le revêtement colorant.

5. Pièce de garniture (40) selon la revendication 3, **caractérisée en ce que**, pour former le revêtement colorant, le support décoratif (4) est un film coloré qui ne laisse pas passer la lumière et qui est pourvu d'au moins un matriçage ou évidement afin de former la fenêtre de lumière, pour former la zone translucide.

6. Pièce de garniture (40) selon l'une des revendications précédentes, le dispositif (47) étant inséré, dans la première position, dans le corps de base (2) ou le support décoratif (4) de manière à former une zone de surface à fleur sur le côté extérieur de la pièce de garniture.

7. Pièce de garniture (40) selon l'une des revendications précédentes, **caractérisée en ce que** la fonction d'éclairage (48) comprend au moins une source de lumière qui est de préférence réalisée sous la forme d'une ou plusieurs LED.

8. Pièce de garniture (40) selon la revendication 5, **caractérisée en ce que** la fonction d'éclairage (48) comprend au moins un corps de guidage de lumière, la lumière de la source de lumière, qui est injectée par couplage dans le corps de guidage de lumière pouvant être amenée en sortie par couplage au niveau de structures de guidage de lumière.

9. Pièce de garniture (40) selon la revendication 1, **caractérisée en ce que** la portion de tête est conçue sous la forme d'un emblème de marque ou d'un symbole ou d'une inscription.

10. Pièce de garniture (40) selon l'une des revendications précédentes, la fonction d'éclairage pouvant inclure aussi bien des aspects liés à la sécurité, comme une fonction de feu clignotant, que des symboles illuminés, des inscriptions illuminées ou même des emblèmes de marque illuminés.
